# EUROPEAN PATENT APPLICATION

(11) **EP 2 354 970 A1**
(43) Date of publication of application: **10.08.2011**
(21) Application number: 10000019.9
(22) Date of filing: 05.01.2010
(51) Int. Cl.: G06F 17/30

(54) **Method, device and system for selecting data items**

(71) Applicant: Deutsche Telekom AG, 53113 Bonn (DE); Technische Universität Berlin, 10623 Berlin (DE)
(72) Inventor: Sundaram, Shiva, 10119 Berlin (DE)
(74) Representative: Blumbach - Zinngrebe

(57) **Abstract**

As a new and improved way of selecting data items from a plurality of data items the invention proposes a method for selecting data items with the the steps of providing a plurality of data items (219), wherein each data item is associated with an N-dimensional vector, and wherein each component of said N-dimensional vector is a measure of a feature of the respective data item, mapping each of said N-dimensional vectors to a corresponding M-dimensional vector, displaying a map (400) on a display (216), said map (400) comprising an entry (410, 412) at a corresponding reference point (410) for each of said data items, wherein the position of each reference point (410) within said map is defined by the M-dimensional vector which corresponds to the N-dimensional vector associated with the respective data item, defining at least one curve (530, 630) within the map (400) from a starting point (510, 610) to an endpoint (520, 620) using a pointing device (214) associated with the display (216), and selecting at least one of said data items depending on the relative position of at least a part of the at least one curve (530, 630) and the reference points (410).

The invention further proposes an electronic device, a system and a digital storage medium for performing such a method.

## Description

### Field of the invention

The invention generally relates to data access, and in particular to a method and a device for accessing and/or selecting data items via a graphical user interface.

### Background of the invention

Today computer users extensively access multimedia documents stored on local devices and in the Internet using browser-like user interfaces. In this, a common method to present a large number of documents, such as for instance text, audio clips or video clips, is an ordered list that expands as a single or multicolumn table. The ordering generally is based on time-stamps, topic, category or alphabetical information. Such a user interface scheme is prevalent in computers, laptops and mobile devices such as mobile phones or handheld music or video players. It is however commonplace today that computing devices like laptops, mp3 players or mobile phones provide access to a large collection of text and multimedia documents. A resulting disadvantage of existing systems is that the users become overloaded, when a large number of documents needs to be accessed and in most cases the access is not intuitive. To efficiently access documents using a list-based user interface is difficult as browsing through a list that contains hundreds or thousands of items is extremely time-consuming. This becomes even more difficult in an environment where the visual attention of the user is devoted to other actions, for instance when driving a vehicle. In addition to the difficulties of using the interface, presenting a new document within a large number of existing documents is even harder in a simple list-based system.

A typical task which involves a selection from a large number of documents is the generation of a playlist of media items. For increasing the efficiency of this kind of task in US 7 111 009 B1 a method for interactive playlist generation is described using annotations, wherein annotations correspond to media segments of one or more multimedia streams. A playlist generation interface is presented to the user in the form of annotation titles or summaries for a group of annotations. This group of annotations corresponds to the media segments that are part of a playlist. The playlist can then be altered by the user to suit his or her desires or needs by interacting with the annotation title/summary interface. The ordering of the annotation titles/summaries can be altered by the user resulting in a corresponding change in order of presentation of the media segments. The ordering of the annotation titles/summaries can be changed by moving the titles or summaries in a drag and drop manner. Further, the media segments of the playlist can themselves be stored as an additional multimedia stream. This additional multimedia stream can then be annotated in the same manner as other multimedia streams.

From US 2007/0038672 A1 a method is known for generating a list of media items selected from a library of media items in response to only a single action being performed, wherein by said single action in particular a seed media item is selected by a user which is used for selecting media items from the library having properties which are related to those of the seed media item.

Thus in the prior art selecting desired media items from a large number of media items is performed by selecting meta data like annotations or properties of a seed media item, wherein desired media items are selected automatically based on this meta data. Although the selection process is made easier by such methods, the user disadvantageously no longer directly selects single media items, but instead selects meta data for an automatic selection of several media items.

It is therefore an object of the present invention to show a new and improved way of selecting data items from a plurality of data items. It is also an object of the present invention to provide an intuitive user interface for the selection of data items.

### Summary of the Invention

The inventive solution of the object is achieved by each of the subject matter of the respective attached independent claims. Advantageous and/or preferred embodiments or refinements are the subject matter of the respective attached dependent claims.

Accordingly, an inventive method for selecting data items comprises the step of providing a plurality of data items, wherein each data item is associated with an N-dimensional vector, and wherein each component of said N-dimensional vector is a measure of a feature of the respective data item. The N-dimensional vector in the following also is referred to as feature vector. The method further comprises the steps of mapping each of said N-dimensional vectors to a corresponding M-dimensional vector, displaying a map on a display, said map comprising an entry at a corresponding reference point for each of said data items, wherein the position of each reference point within said map is defined by the M-dimensional vector which corresponds to the N-dimensional vector associated with the respective data item, defining at least one curve within the map from a starting point to an endpoint using a pointing device associated with the display, and selecting at least one of said data items depending on the relative position of at least a part of the at least one curve and the reference points. N and M are integer values which are equal to or larger than 1.

The data items for instance can be multimedia documents such as text, audio or video files, which are stored locally or in the Internet or both, wherein the feature values making up the N-dimensional vector associated with a multimedia document may comprise a wide variety of properties or descriptive information. Examples are file properties like data size, filename, file type, creation date or modification date, or any kind of keywords, categories or other tags. For audio files the features may for instance also comprise information like song title, artist, frequency range, beats per minute or any other kind of audio property. For text documents the features may for instance comprise additional information like topic or word count. In general any kind of information associated with a data item may be used as a feature. The data items may also with advantage be provided as data streams.

For easier processing the components of the N-dimensional vectors preferably are numerical values. Since such a wide variety of information can be used to characterize a data item, each feature preferably is mapped to a numerical value which represents a measure of the feature.

An entry in the map typically is a displayed point or an area. The entry can preferably be provided with additional properties like the shape of the displayed area, for instance a circle, a square or a triangle, the color of the displayed area, or additional information like text which is displayed adjacent to the point or area.

Accordingly, in a simple embodiment of the method M equals two, wherein the two dimensions of each M-dimensional vector define the position of the respective reference point within the displayed map at which the respective entry is displayed. However, M may with advantage also be larger than two, wherein two dimensions of the M-dimensional vector define the position of the respective reference point within the displayed map and the at least one additional dimension defines the appearance of the respective entry in the map, for instance the color based on a pre-defined color scheme. Also a three-dimensional display device may be utilized, in which case three dimensions of the M-dimensional vector define the position of the respective reference point within the displayed three-dimensional map. In this embodiment also further dimensions can be utilized for defining the appearance of the respective entry in the map.

In order to precisely characterize the data items the N-dimensional feature vector associated with a data item typically is a multi-dimensional vector with a large value of N. Preferably, by mapping the N-dimensional vectors to the corresponding M-dimensional vectors the number of dimensions is reduced to allow presentation on a two- or three-dimensional display, and thus preferably M has a lower value than N.

In a preferred embodiment the method comprises determining the associated N-dimensional feature vector for at least one of the plurality of data items. For this purpose preferably N pre-defined features of the respective data items are extracted, mapped to numerical values and assembled to the associated N-dimensional vectors. For certain data items the step of extracting a feature may for comprise accessing a database and retrieving the feature from said database in response to providing information which identifies the respective data item. The step of providing the plurality of data items may also with advantage comprise determining for each of the plurality of data items the associated N-dimensional vector.

The method can advantageously be utilized in different types of devices, such as for instance desktop computers, notebooks, mobile phones, smart-phones, PDAs or media players. Accordingly, different types of pointing devices, such as a computer mouse, a trackball, a touchpad, a graphics tablet, a touch screen or any other suitable device may be employed for defining a curve within the map. For instance a curve may be defined by pressing a mouse button with the mouse pointer located at the starting point of the curve, moving the mouse pointer to the endpoint of the curve and releasing the mouse button again, wherein the sequence of display points which the mouse pointer passes from the starting point to the endpoint defines the curve progression. With different pointing devices similar procedures may be performed, like for instance touching a touch screen at a starting point, moving the touching finger to the endpoint and releasing the touch screen again. A curve defined by a procedure as described above may also with advantage be automatically smoothed using a pre-defined algorithm. An alternative procedure for defining a curve with the pointing device comprises identifying a sequence of locations within the map, for instance by consecutively clicking at different locations within the map with a computer mouse. In this embodiment the curve is defined by a series of curve sections, wherein each curve section connects consecutive locations of said sequence of locations. The curve sections may be direct lines connecting the respective locations or may be automatically adapted to yield, in combinations with the other curve sections, a smooth curve.

A main idea of the inventive method is to automatically select data items by drawing at least one curve on a display using a pointing device, wherein on the display a plurality of reference points are displayed each of which represents a data item, and wherein the selection is performed based on the relative position of the reference points and at least parts of each of the curves. The plurality of displayed reference points is also referred to as map, since the position of each displayed reference point is defined by a mapping procedure performed on an N-dimensional feature vector representing features of the respective corresponding data item.

In a preferred embodiment for at least one of the curves at least part of the curve is a.closed curve defining an area or shape within the map, wherein all data items are selected for which the corresponding reference points lie within said area.

In another preferred embodiment all data items are automatically selected for which the corresponding reference points are located within a predefined distance from at least one of the curves, wherein the distance may be defined as the shortest distance between the respective reference point and any point on the respective curve. The predefined distance preferably is adjustable by a user of the device in which the method is performed.

In a further preferred embodiment at least one of the curves is divided into at least two sections and for each section a predefined number of data items are selected for which the corresponding reference points are located closest to the respective curve section. The number of curve sections into which the curve is divided and/or the number of selected data items per curve section preferably are definable by the user. Alternatively a value for the length of a curve section may be predefined, wherein the curve.sections may be consecutively defined while defining the curve with the pointing device, wherein a new curve section is started, whenever the predefined length is reached. That way the curve sections essentially all have the same length, which has the advantage that the length of the curve is essentially proportional to the number of selected data items. Therefore, the user advantageously can control the number of selected data items by the curve length.

In still another preferred embodiment at least one of the curves is defined by consecutively identifying a number of points within the map, said number of points at least comprising the starting point and the endpoint of the curve, and wherein for each identified point the data item is selected for which the corresponding reference point is located closest to the respective identified point.

With special advantage also the ordering of the selected data items is defined by the at least one curve, for instance for the purpose of generating a playlist which comprises the data items. If two or more curves are consecutively defined, for each defined curve a group of data items is selected, wherein preferably the ordering of the groups of selected data items matches the order in which the curves have been defined. The ordering within each group of selected data items, i.e. the data items selected with respect to a single defined curve or with respect to one of several curves, can be defined in different ways. For instance, for each selected data item the corresponding reference point is projected onto the closest point on the respective curve and the ordering of the data items is defined by the ordering of the projected points along the curve from the starting point to the endpoint. Alternatively the ordering of the selected data items may be defined by the distance between the corresponding reference points and the curve, either starting with the smallest or with the largest distance. Starting with the largest distance is for instance advantageous in embodiments in which the curve comprises a closed curve and in which the reference points which correspond to the selected data items lie within an area defined by that closed curve, since that way data items with corresponding reference points close to the center of the area come first in the ordered list and data items with corresponding reference points close to the edge of the area come last. Accordingly, the method preferably comprises the step of generating an ordered list of the selected data items, wherein the ordering is defined depending on the order in which the curves are defined and depending on the relative position of the respective one of the curves and the reference points corresponding to the selected data items and/or depending on the ordering of the reference points corresponding to the selected data items along the respective one of the curves from the starting point to the endpoint.

The method preferably further comprises performing a predefined function on the selected data items like accessing, storing, displaying, outputting or any other suitable function depending on the type of the data items. If the data items are for instance audio clips, performing the predefined function may in particular comprise playing the audio clips according to a generated ordered playlist.

An inventive electronic device which is adapted to perform a method as described above comprises means for accessing a plurality of data items, a display, a pointing device associated with the display and a control unit, wherein the control unit is adapted to map for each of said plurality of data items an associated N-dimensional vector to a corresponding M-dimensional vector and to cause displaying a map on the display, said map comprising an entry at a corresponding reference point for each of said data items, wherein the position of each reference point within said map is defined by the M-dimensional vector which corresponds to the N-dimensional vector associated with the respective data item, and wherein said control unit is further adapted to automatically select at least one of said data items depending on the relative position of the reference points and at least one curve input via said pointing device. The electronic device preferably is a desktop computer, a notebook, a mobile phone, a smart-phone, a PDA or a media player. However, any other suitably adapted device may also be used.

In a preferred embodiment of the invention at least part of the data items is not stored locally in the electronic device, but is accessible via a communications network, in particular the Internet. Therefore a system is proposed which comprises at least one electronic device as described above and at least one data source with at least one data item stored therein, wherein the electronic device is connected to the data sources via a communications network, in particular the Internet.

In order to provide an easy implementation and/or specific adaptation of the invention, a digital storage medium is proposed, comprising electronically readable control instructions adapted to execute any of the embodiments of the above described method, when inserted in an electronic device having the above described features.

An electronic device and/or a system as described above preferably are adapted for performing any one of the above described preferred embodiments of the inventive method.

### Brief Description of the Figures

It is shown in
- Fig. 1: schematically the general concept of a preferred embodiment of the inventive method,
- Fig. 2: schematically a preferred embodiment of an inventive electronic device,
- Fig. 3: schematically a preferred embodiment of an inventive system,
- Fig. 4: schematically a map comprising entries for a plurality of data items,
- Fig. 5: schematically a first preferred way of selecting data items depending on a curve defined within the map of Fig. 4,
- Fig. 6: schematically a second preferred way of selecting data items depending on a curve defined within the map of Fig. 4,
- Fig. 7: schematically a third preferred way of selecting data items depending on a curve defined within the map of Fig. 4,
- Fig. 8: schematically a fourth preferred way of selecting data items depending on a curve defined within the map of Fig. 4,
- Fig. 9: a playlist comprising the data items selected using the selection variant shown in Fig. 5,
- Fig. 10: a playlist comprising the data items selected using the selection variant shown in Fig. 6,
- Fig. 11: a playlist comprising the data items selected using the selection variant shown in Fig. 7,
- Fig. 12: a playlist comprising the data items selected using the selection variant shown in Fig. 8.

### Detailed Description of the Invention

Subsequently, preferred but exemplar embodiments of the invention are described in more detail with regard to the figures. Same reference numbers indicate same or similar components.

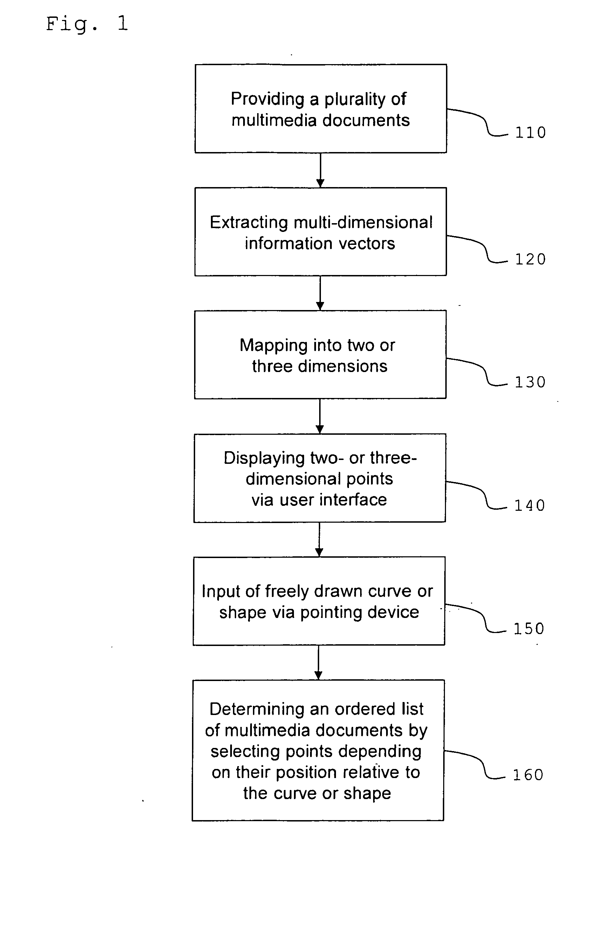

In Fig. 1 a flowchart is shown in which the steps of a preferred embodiment of an inventive method are given.

In step 110 a plurality of multimedia documents are provided, wherein the documents exemplary are provided in a local or remote library of documents. The collection of multimedia documents may for instance comprise text, audio clips, music,clips, video clips, web pages or any other structured information document. The collection can be from a few documents to thousands of documents. The whole collection or parts of it can locally reside in any electronic device or can be accessible remotely using the Internet or any other suitable data access network.

In step 120 for each of at least a part of the plurality of multimedia documents an information vector is extracted, wherein the extraction procedure may comprise any automatic, semi-automatic or manual information extraction or annotation procedure. Preferably meaningful dimensions, i.e. features, of the respective document are measured quantitatively and/or represented in any other suitable manner, for instance by mapping a feature with discrete possible manifestations to corresponding numeric values. The number of dimensions of the information vector can range from 1 to any required number. Depending on the respective purpose, measurements and/or representations of varying levels of sophistication may be advantageously utilized, from a simple function of alphabetical positioning of the document names to any complicated signal representation procedure.

In step 130 a mapping of the typically multi-dimensional information vectors into two or three dimensions is performed. This step can again be either a simple procedure of manually or automatically selecting any two or three dimensions of the multidimensional representation or a more sophisticated mathematical operation of reducing the multi-dimensional representation of the documents to a two- or three-dimensional representation that is more suitable to be presented in a graphical user interface (GUI). For this purpose with advantage neural networks can be utilized, since neural networks can be applied for the purpose of identifying patterns or trends in data. A special type of neural network well suited for this purpose is the Self-Organizing Map (SOM). The Self-Organizing Map algorithm is an unsupervised learning algorithm which is used to process high-dimensional data in order to visualize it on a two-dimensional screen. The multi-dimensional representation of the data items could also be mapped to a representation of more than three dimensions, wherein this could however reduce the clarity of the presentation in the GUI.

In step 140 the documents are presented as points or markers on a two- or three-dimensional "map" in a two- or three-dimensional graphical user interface which is provided with a touch-sensitive or other pointing device. The graphical user interface may for instance comprise a computer screen, i.e a monitor, or an interface typically provided in a hand-held or consumer electronics device. The user can interact with the user interface with any pointing device such as a computer mouse or a touch-screen. Preferably the multi-dimensional information vectors which correspond to similar documents are mapped to similar locations in the map. This can for instance be achieved by using the SOM algorithm for mapping, because of the ability of the SOM algorithm of projecting the high-dimensional spaces into the low-dimensional space while preserving the topological properties. The information vectors may be mapped into more dimensions than the two or three of the GUI, in which case an additional dimension preferably is expressed by the color of the displayed points or markers using a pre-defined color scheme. The entries in the two- or three-dimensional GUI can also with advantage be provided with additional information like for instance the document name or a keyword describing the content.

In step 150 a user draws a free curve or a shape or marks an area with respect to the displayed points on the user interface and/or display device using an associated pointing device. The curve or the shape represents an exact or approximate desired area of selection of the documents presented in the GUI. Also more than one curve or shape may be drawn consecutively or simultaneously.

In step 160 a selection procedure is invoked to select, depending on the at least one curve or user-defined shape, the corresponding points in the two-dimensional representation of the GUI, resulting in an ordered selection of points, wherein said ordered selection for instance is defined by the respective shape or comprises those points which are closest to the respective curve.

Since each displayed point is associated with a multimedia document, the ordered selection of points in the two- or three-dimensional GUI corresponds to an ordered list of selected multimedia documents. Therefore, after the selection procedure is completed, preferably a playlist or display-list of the selected multimedia documents is generated and displayed to the user via the GUI.

Whenever the features of at least one of the plurality of multimedia documents is changed, for instance by adding or changing an annotation, also the corresponding information vector changes resulting in a different mapping and accordingly a different position within the map displayed in the GUI. Therefore, whenever the features of at least one of the plurality of multimedia documents is changed or a new multimedia document is added to the library, the steps 110 to 140 shown in Fig. 1 preferably are repeated resulting in an updated map in the GUI. In a preferred embodiment new updates within the map are represented and/or indicated using a pre-defined color scheme, i.e. by displaying new and/or changed entries in the map in different colors than the old entries. Alternatively or additionally brightness and/or contrast differences between new, changed and/or old entries or displaying new and/or changed entries in the foreground and old entries in the background can be used for representation and/or indication. The method therefore advantageously provides for a rich representation of data items in a multi-dimensional space as points or areas with varying colors and contrasts, allowing user interaction using a pointing device and/or a tactile interface.

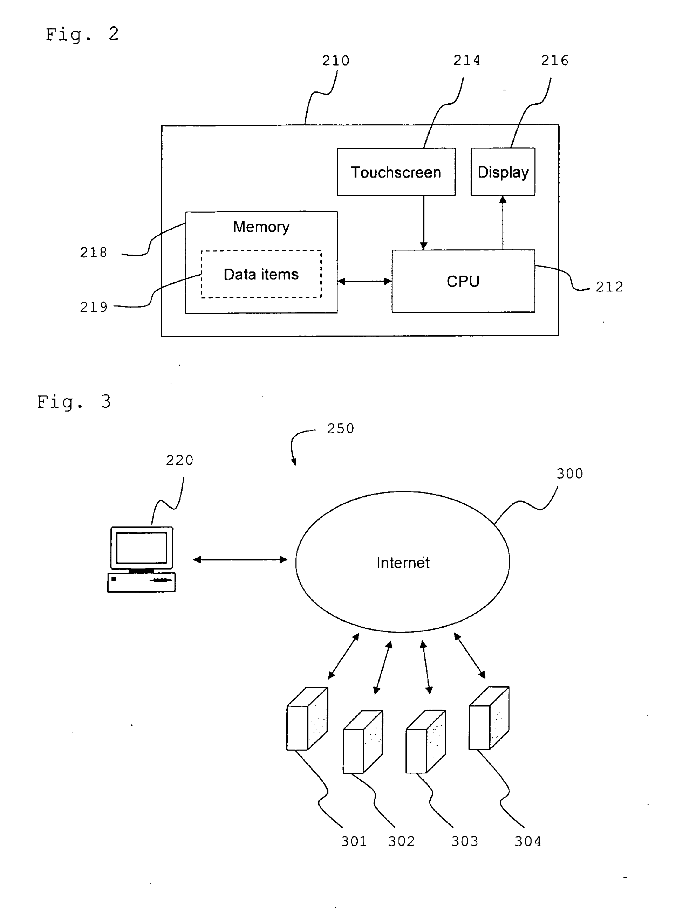

An exemplary electronic device 210 which is adapted for performing the above described method is shown in Fig. 2. In the shown embodiment the device 210 comprises a memory 218 in which a plurality of data items 219, for instance multimedia documents, is stored. The device 210 is further provided with a GUI comprising a display 219 and an associated touch-screen 214. The above described method is performed by the device by utilizing an accordingly adapted software program which is executed by the CPU 212. For this purpose the CPU 212 has access to the memory 218, receives information on user input via the touch-screen 214 and is adapted for displaying information on the display 216.

Fig. 3 shows a system 250 comprising a computer 220 which is adapted for performing the above described method. In the embodiment shown in Fig. 3 the computer 220 has access via the Internet 300 to multimedia documents which are stored in data sources 301-304, said data sources also being connected to the Internet 300. Further multimedia documents can be stored locally in a memory of computer 220, wherein access to the locally stored documents and to those accessible via the Internet 300 is provided to the user via the same GUI.

The documents preferably are represented in a multidimensional space which implicitly carries document similarity information. A playlist of interesting and/or relevant documents for subsequent browsing is constructed by a user interacting with the multidimensional space. In particular at least one curve or closed area is created using a computer pointing device and/or tactile information. The documents that are related to each of theses drawn curves or areas are selected to be included in the playlist. The generation mechanism depends on the relationship between the arrangement of documents and the user-drawn curves or areas.

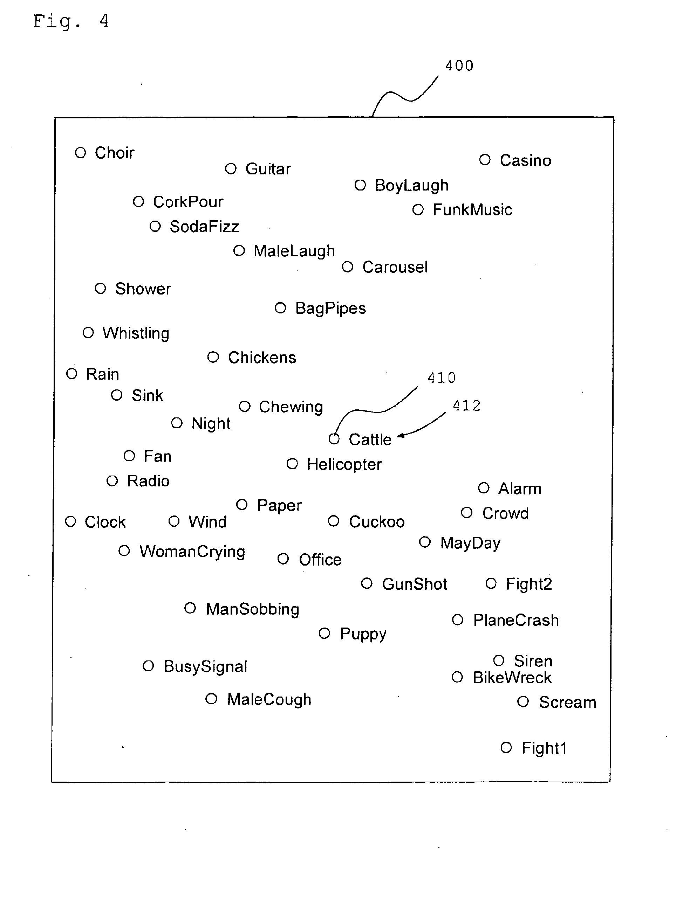

Fig. 4 exemplary shows a two-dimensional map 400 to be shown in the GUI comprising a plurality of entries, which have the form of a circle and which are exemplary denoted with reference sign 410, wherein the position of each entry 410 within map 400 is defined by an M-dimensional vector determined by the mapping procedure of step 140 as shown in Fig. 1. Actually the position of a reference point associated with the entry, for instance the center of the circle, is defined. Each entry therefore represents a multimedia document, which in the shown example is an audio clip. In the shown embodiment M equals two, an M-dimensional vector thus providing two dimensions which for instance define x and y coordinates of the corresponding entry 410. Although not shown, the M-dimensional vector could with advantage comprise further dimensions, which for instance could be used for defining the displayed color of the respective entry. Hence, the colors of the entries may be a function of an additional dimension or other media annotations such as popularity ratings of a single user and/or group in a social networking community. In the shown embodiment each entry 410 is provided with a keyword, exemplary denoted with the reference sign 412, which describes the content of the corresponding audio clip. The map 400 as shown in Fig. 4 is displayed in a GUI to a user, wherein the user is enabled to define at least one curve within the map 400 in order to select one or more of the displayed entries, thereby selecting the corresponding audio clips.

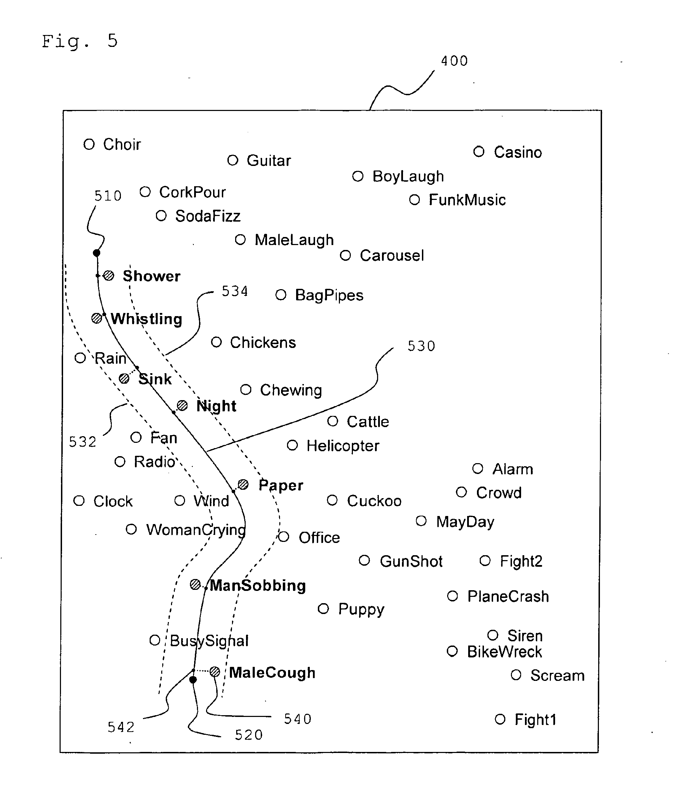

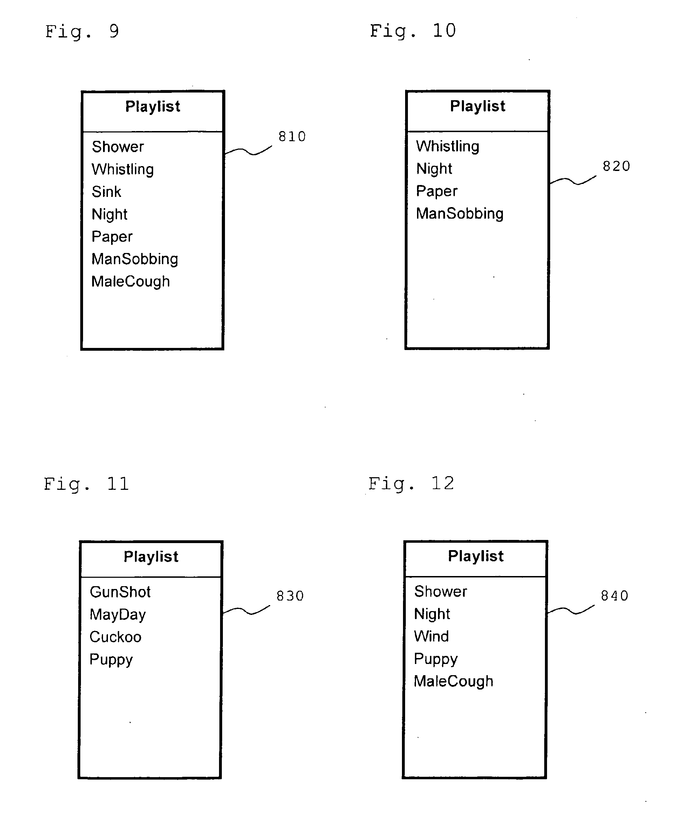

Four different exemplary ways of selecting audio clips depending on a user-defined curve defined within the map 400 are shown in Figures 5, 6, 7 and 8. Each of the four selection procedures yields an ordered playlist, which are respectively shown in Figures 9, 10, 11 and 12.

In the first embodiment as shown in Fig. 5, the user draws a free curve 530 from a starting point 510 to an endpoint 520, wherein all entries are automatically selected for which the corresponding reference points are located within a predefined distance from the curve 530. This predefined distance is indicated by the lines 532 and 534 which define a corridor, wherein all entries within that corridor are selected. The selected entries are indicated by hachures. The distance of an entry 540 to the curve is determined as the distance to the respective closest point 542 which lies on the curve. From the selected entries an ordered playlist 810 is generated which is shown in Fig. 9, wherein the ordering is defined by the ordering of the closest points 542 on the curve 530 for each of the selected entries 540 along the curve 530 from the starting point 510 to the endpoint 520. Alternatively, the ordering can be defined by the distance of the reference points of the selected entries to the starting point 510 and/or the endpoint 520, typically with those coming first which have a small distance to the starting point 510 and a large distance to the endpoint 520.

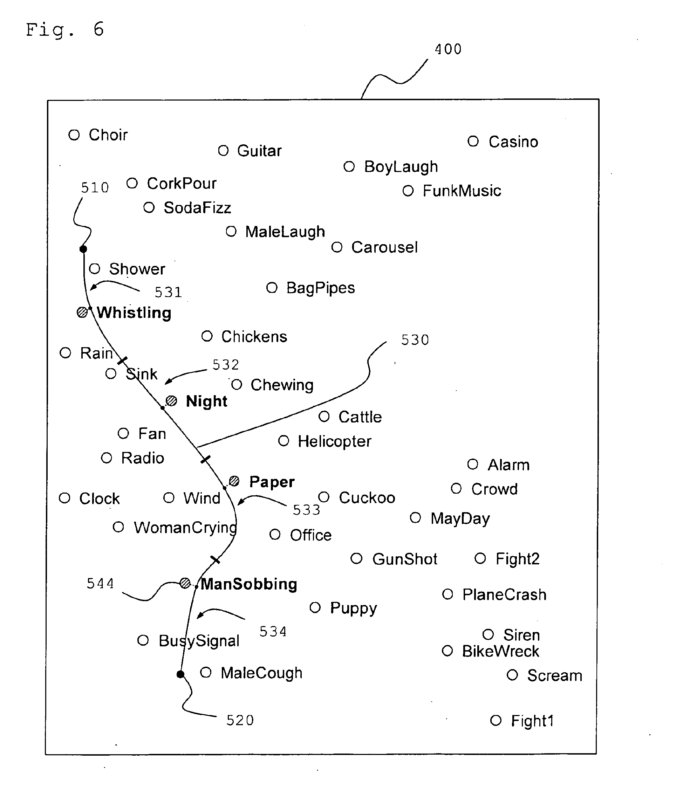

In Fig. 6 a second embodiment is shown, wherein again the user draws a curve 530 from a starting point 510 to an endpoint 520. In this embodiment however, the curve 530 is automatically divided into consecutive curve sections 531, 532, 533 and 534, wherein for each of the curve sections the respectively closest entry is selected. This exemplary shown for curve section 534, wherein entry 544 is selected, since it is closest to curve section 534. In the shown embodiment the curve is automatically divided into four sections and for each section the one closest entry is selected. The number of sections and the number of entries to be selected per curve section preferably can be pre-defined by the user, so that always the same number of entries and thus audio clips are selected. The ordering of the selected entries is performed in the same way as described with to embodiment as shown in Fig. 5, resulting in the playlist 820 as shown in Fig. 10.

Although it is described above that the entries closest to the curve are selected, it is also possible to include other selection procedures using approximate nearest neighbors or other probabilistic methods.

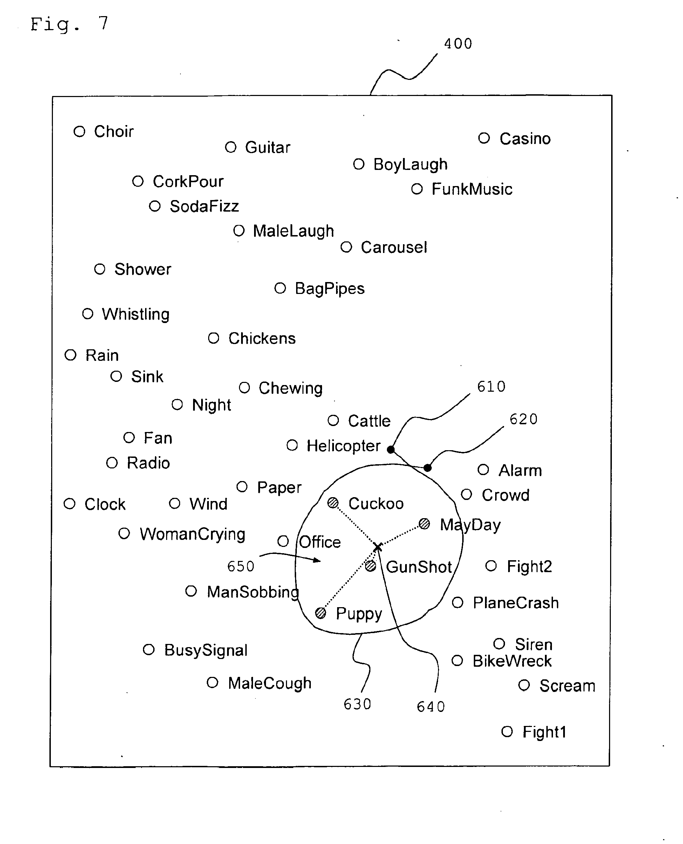

Instead of drawing an open line like in the described first and second embodiment, in a third preferred embodiment, as shown in Fig. 7, at least part of the curve 630, which is drawn by a user from starting point 610 to endpoint 620, is a closed curve defining an area 650 within the map 400, wherein all entries are selected for which the corresponding reference points lie within said area 650. In the shown embodiment a center point 640 of area 650 is determined and the ordering of the selected entries is defined by the distance between this center point 640 and the reference point of the respective selected entry, resulting in the ordered playlist 830 as shown in Fig. 11.

Alternatively, the ordering can be defined in the same way as in the first and second embodiment

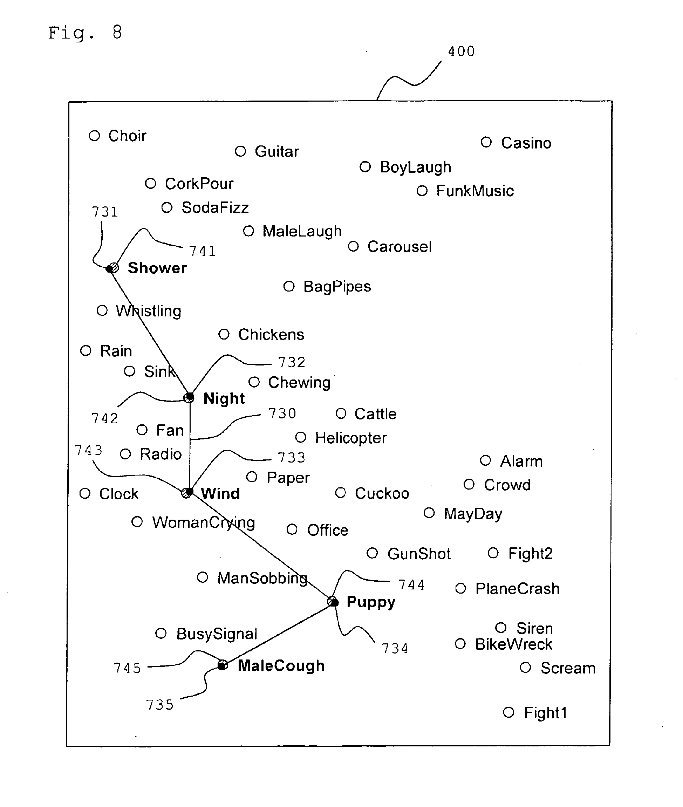

In Fig. 8 a fourth embodiment is shown, wherein the curve 730 is defined by consecutively identifying a number of points 731, 732, 733, 734 and 735 within the map, for instance by consecutively clicking with a mouse pointer at the positions of the points starting at point 731, wherein the endpoint 735 could for instance be indicated by a double-click. In the shown embodiment for each of said identified points 731-735 within the map the respective entries 741-745 are selected for which the reference point is closest to the respective one of the identified points 731-735. The ordering in this embodiment is defined by the sequence order in which the points 731-735 are identified, resulting in the playlist 840 as shown in Fig. 12.

It is to be noted that for the ordering also a variety of other ways can be utilized, such as for instance ordering by the distance to the closest point on the curve or the tangent, randomized ordering, alphabetical ordering with respect to filename or keyword, ordering by data size or by creation or modification date.

Although above with respect to Figures 5 to 12 embodiments have been described in which a single curve is drawn, preferably also two or more curves may be drawn by the user consecutively and/or simultaneously resulting in a selection of entries, said selection comprising all entries selected depending on each of the curves. The different embodiments described above may also be combined. For generating a playlist preferably also the order in which the curves are drawn is taken into account. For simultaneously drawing curves for instance a multi-touch tactile interface may be provided. If curves are drawn simultaneously, the ordering of the selected entries may be determined depending on the order in which parts of these curves are drawn.

After selecting a number of entries in the map with advantage the remaining entries could be removed from the GUI, allowing the user to perform another selection on the previously selected entries. In this embodiment which allows for repetitive selection steps, the generation of a playlist from the selected entries may be initiated by an additional user action, for instance by pressing a button.

Compared to the prior art, the invention provides a richer and more intuitive user interface to represent multiple multimedia documents as points or well specified regions using two, three or other multi-dimensional information in a graphical user environment. This allows the user to access single or multiple multimedia documents as a "curve" or a "shape" by using a touch-based interface or using any other pointing device. The curve represents a structured path to order and list the multiple documents. Using such a curve, the users can access multiple documents one at a time or many together. Since the curve is in the same multi-dimensional space in which the documents are represented, the resulting ordered list of documents will be arranged in an intuitive and meaningful way. In addition to this, rich information about the documents and the curve can also be represented using different color schemes. Such an interface can be easily deployed on a computer, laptop or any handheld device used to access documents locally or via the internet. One great advantage of an inventive method is to allow the user to create both small and large playlists and browse-lists without explicitly analyzing titles or individual meta-information from the documents. This transfers the load of making ordered lists from the user to the user interface in an intuitive manner. For example, such a scheme can be implemented in a music player to create playlists of the music files. The curve can also be adjusted online or modified according to any user-defined preference.

The invention thus relates to a method and apparatus to use extra information to represent multiple multimedia documents in a multi-dimensional GUI. It mainly covers ordering, generating the playlist and accessing it using at least one curve. Many automatic or user-based similarity methods can be used to derive the subsequent list of documents with respect to the curve defined by the user in the GUI. The extra information for representation can be user-generated or automatically generated tags, reviews, ratings or automatically derived ranking schemes based on statistical and/or signal-based information derived from the underlying multimedia documents.

## Claims

1. A method for selecting data items, comprising the steps of
- providing a plurality of data items (219), wherein each data item is associated with an N-dimensional vector, and wherein each component of said N-dimensional vector is a measure of a feature of the respective data item,
- mapping each of said N-dimensional vectors to a corresponding M-dimensional vector,
- displaying a map (400) on a display (216), said map (400) comprising an entry (410, 412) at a corresponding reference point (410) for each of said data items, wherein the position of each reference point (410) within said map is defined by the M-dimensional vector which corresponds to the N-dimensional vector associated with the respective data item,
- defining at least one curve (530, 630) within the map (400) from a starting point (510, 610) to an endpoint (520, 620) using a pointing device (214) associated with the display (216), and
- selecting at least one of said data items depending on the relative position of at least a part of the at least one curve (530, 630) and the reference points (410).

2. The method of claim 1, wherein M=2 with the two dimensions of each M-dimensional vector defining the position of the respective reference point (410) within then displayed map (400).

3. The method of claim 1, wherein M>2 with two dimensions of the M-dimensional vector defining the position of the respective reference point (410) within the displayed map (400) and the at least one additional dimension defining the appearance of the respective entry (410, 412) in the map.

4. The method of any one of the preceding claims, wherein M < N.

5. The method of any one of the preceding claims, wherein the step of providing said plurality of data items (219) comprises determining for each of the plurality of data items the associated N-dimensional vector.

6. The method of any one of the preceding claims, wherein at least part of at least one of the curves (630) is a closed curve defining an area (650) within the map (400), and wherein all data items are selected for which the corresponding reference points lie within said area (650).

7. The method of any one of the preceding claims, wherein all data items are selected for which the corresponding reference points (540) are located within a predefined distance from at least one of the curves (530).

8. The method of any one of the preceding claims, wherein at least one of the curves (530) is divided into at least two sections (531-534) and for each section (531-534) a predefined number of data items are selected for which the corresponding reference points (544) are located closest to' the respective curve section (531-534).

9. The method of any one of the preceding claims, wherein at least one of the curves is defined by consecutively identifying a number of points within the map, said number of points at least comprising the starting point and the endpoint of the curve, and wherein for each identified point the data item is selected for which the corresponding reference point is located closest to the respective identified point.

10. The method of any one of the preceding claims, further comprising the step of
- generating an ordered list (710, 720, 730) of the selected data items, wherein the ordering is defined depending on the order in which the curves are defined and depending on the relative position of the respective one of the curves (530, 630) and the reference points corresponding to the selected data items and/or depending on the ordering of the reference points corresponding to the selected data items along the respective one of the curves (530, 630) from the starting point (510, 610) to the endpoint (520, 620).

11. The method of any one of the preceding claims, wherein each of the data items is a multimedia document.

12. The method of any one of the preceding claims, wherein a predefined function is performed on the selected data items.

13. An electronic device (210, 220), adapted to perform a method according to one of claims 1 to 12, comprising
- means for accessing a plurality of data items (219),
- a display (216),
- a pointing device (214) associated with the display, and
- a control unit (212), wherein
said control unit is adapted to map for each of said plurality of data items (219) an associated N-dimensional vector to a corresponding M-dimensional vector and to cause displaying a map (400) on the display (216), said map (400) comprising an entry (410, 412) at a corresponding reference point (410) for each of said data items, wherein the position of each reference point (410) within said map (400) is defined by the M-dimensional vector which corresponds to the N-dimensional vector associated with the respective data item, and wherein
said control unit (212) is further adapted to automatically select at least one of said data items depending on the relative position of the reference points (410) and at least one curve (530, 630) input via said pointing device (214).

14. A system (250), comprising
- at least one electronic device (220) according to claim 13, and
- at least one data source (301-304) with at least one data item stored therein, wherein
said electronic device (220) is connected to said data sources (301-304) via a communications network (300), in particular the Internet.

15. A digital storage medium, comprising electronically readable control instructions adapted to execute, when inserted in an electronic device (210, 220) of claim 13, a method of any one of claims 1 to 12.
